(19) Europäisches Patentamt
European Patent Office
Office européen des brevets

(11) Publication number: **0 125 797**
**B1**

(12) **EUROPEAN PATENT SPECIFICATION**

(45) Date of publication of patent specification: **14.10.87**

(51) Int. Cl.$^4$: **G 06 F 13/24,** G 06 F 11/16

(21) Application number: **84302530.5**

(22) Date of filing: **13.04.84**

# (54) Interrupt signal handling apparatus.

(30) Priority: **13.04.83 GB 8310003**

(43) Date of publication of application:
**21.11.84 Bulletin 84/47**

(45) Publication of the grant of the patent:
**14.10.87 Bulletin 87/42**

(84) Designated Contracting States:
**DE FR NL SE**

(56) References cited:
**EP-A-0 012 886**
**US-A-3 716 837**
**US-A-3 895 353**
**US-A-4 330 826**

**AFIPS CONFERENCE PROCEEDINGS, 1981 NATIONAL COMPUTER CONFERENCE, 4th-7th May 1981, Chicago, pages 27-40, AFIPS PRESS, Arlington, Virginia, US; A. AVIZIENIS: "Fault tolerance by means of external monitoring of computer systems"**

**PATENTS ABSTRACTS OF JAPAN, vol. 6, no. 151, 11th August 1982, page 131 E 124; & JP - A - 57 75 047 (HITACHI SEISAKUSHO K.K.) 11-05-1982**

(73) Proprietor: **The General Electric Company, p.l.c.**
**1 Stanhope Gate**
**London W1A 1EH (GB)**

(72) Inventor: **Niblock, John Andrew**
**7 Kingsley Crescent**
**Bulkington Nuneaton, CV12 9PL (GB)**
Inventor: **Patel, Jayant**
**18 Ellys Road**
**Radford Coventry, CV1 4EW (GB)**
Inventor: **Fisher, Dennis**
**12 Nightingale Drive**
**Tipton, DY4 7QI (GB)**
Inventor: **Lumb, Anthony Peter**
**63 Merlin Avenue**
**Nuneaton, CV10 9JY (GB)**

(74) Representative: **Hoste, Colin Francis**
**The General Electric Company p.l.c. Central Patent Department (Wembley Office) Hirst Research Centre East Lane**
**Wembley Middlesex, HA9 7PP (GB)**

(56) References cited:
**IBM TECHNICAL DISCLOSURE BULLETIN, vol. 25, no. 7B, December 1982, pages 3665-3667, New York, US; T.A. STRANKO: "Enhanced sensor tracking"**

**EP 0 125 797 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:

**AFIPS CONFERENCE PROCEEDINGS, 1979 NATIONAL COMPUTER CONFERENCE, 4th-7th June 1979, New York,, vol. 48, pages 587-593, AFIPS PRESS, Montvale, New Jersey, US; K.A. ELMQUIST: "Architecural and design perspectives in a modular multi-microprocessor, the DPS-1"**

**NEUES AUS DER TECHNIK, no. 6, 1st December 1972, page 058, Würzburg, DE; "Prioritätsregister in eines Multiprozessor-Kontrolleinheit"**
**Automatic Control, December 1959, pages 46-52**

## Description

The present invention relates to interrupt signal handling apparatus for controlling the transfer of interrupt signals to a data processor.

It is common practice to provide apparatus connected to a data processor with the ability to signal to the data processor a change of its status which requires the running of a special program. Such signals presented to the data processor are usually referred to as "interrupts". Such interrupts are graded according to their urgency and in particular may be categorised as "immediate" — that is requiring urgent attention, and "non-immediate" — that is requiring handling by a special program but not likely to result in a serious malfunction if the handling of it is delayed.

On receipt of an interrupt the data processor hardware forces the data processor software program currently running to be "nested" (stored in a recoverable state) and causes an interrupt handling program to run to deal with the interrupt.

Such action may occur unnecessarily on numerous occasions if the number of non-immediate interrupts to be handled is high in comparison to the number of immediate interrupts. Such unnecessary actions impede the efficient running of the data processor and, particularly when the data processor is required to operate in real-time, reduce the loading which may be placed thereon.

In US—A—3895353 (Dalton) there is disclosed interrupt signal handling apparatus for controlling the transfer of interrupt signals to a data processor, said apparatus having two interrupt signal units each of which has a plurality of inputs arranged for connection to a respective source of interrupt signals, an output for connection to a data processor, a data store which stores each interrupt signal received on one of said inputs and control means which compares each interrupt signal so received and stored with presettable criteria which determine whether the received signal is an immediate interrupt signal.

In this known apparatus, in normal use the contents of the duplicate interrupt stores are compared, and when there is a disparity this is detected by the processor which proceeds to test the storage elements of both interrupt stores, to lock out any storage element which may be faulty, and then to proceed by receiving interrupts from those storage elements of either store which have not been locked out.

An object of the present invention is to provide interrupt signal handling apparatus which has a higher level of security compared with the abovementioned known apparatus.

According to the present invention, there is provided interrupt signal handling apparatus as described in the first part of claim 1, characterised in that one of said units is selected as an active interrupt signal unit and the other of said units is selected as a monitoring interrupt signal unit, the active interrupt signal unit on determining that a received interrupt signal is an immediate interrupt signal causes all said interrupt signals currently stored to be passed to its respective output and the subsequent erasure of those interrupt signals whereby all interrupt signals received and stored as aforesaid are transferred to a data processor when connected to the apparatus, on occurrence of an immediate interrupt signal the monitoring interrupt signal unit monitors an output of the active interrupt signal unit to determine whether that unit has acted to transfer interrupt signals in the manner aforesaid and if so erases corresponding interrupt signals from its respective data store and if not causes those corresponding interrupt signals to be transferred to its respective output such that the interrupt signals for transfer to a data processor when connected to the apparatus are not lost if one of the interrupt signal units fails, and the selection of one of the units as active and the other as monitoring is effected by the control means of the two units and is reversible from time-to-time responsive to action of a data processor when connected to the apparatus.

AFIPS Conference Proceedings, 1981 National Computer Conference, 4th—7th May 1981, at pages 27—40 (Avizienis) discusses methods of increasing the reliability of an existing computer system by employing a separate monitor computer. The monitor computer may be a duplicate computer or a distinct (general purpose or custom) computer. For real time applications the duplicate computer approach is preferred in which monitoring is by direct comparison of variables. Instead of duplication, only certain key events can be monitored. A dedicated channel can be used for the transmission of monitored data.

Automatic Control, December 1959, at pages 46—52 (Chao and Rocheleau) discusses how two duplicate computers can be used to process the same problem and check on each other's progress as they proceed. In a possible real time application one computer (the stand-by processor) periodically checks whether the other computer (the working processor) has come to a halt, deduces whether that halt is due to an error, and if so the stand-by processor automatically takes over the real time computation from the working processor.

In apparatus according to the present invention each of said interrupt signal units may have a plurality of outputs each of which is arranged for connection to a respective one of a plurality of data processors, the control means being presettable to select to which of the data processors the interrupt signals are transferred.

The control means of each of said interrupt signal units may be arranged to monitor periodic timing signals from a data processor when connected thereto and arranged to provide an alarm signal should any such timing signal be missed.

Monitoring of periodic timing signals is known per se from US—A—4330826.

In apparatus according to the present invention each interrupt signal unit may have a temporary data store interposed between said data store and said output, the control means being arranged on detection of an immediate interrupt signal to cause the interrupt signals to be transferred to said temporary data store for presentation to the output. Furthermore, interrupt signals presented at the output by the temporary data store may be passed to the data store, said data store being arranged to erase only such interrupt signals as have been presented at the output.

Erasure of transferred interrupt signals is known per se from US—A—3716837.

Interrupt signal handling apparatus in accordance with the invention will now be described by way of example only with reference to the accompanying drawings of which:—

Figure 1 is a block schematic diagram of one unit of the apparatus in use with multiple data processors; and

Figure 2 is a connection diagram showing the interconnection of the two units of the apparatus to multiple data processors.

Referring to Figure 1 the apparatus referred to hereinafter as an interrupt logic unit 1 handles interrupt signals generated by telephone exchange apparatus for example (not shown) which signals are received by way of a number of inputs 20 to 2x. The interrupt signals are stored by the interrupt logic unit 1 and forwarded to one of *N* data processors 30 to 3N either immediately (immediate interrupt) or subsequently (non-immediate interrupt).

To this end each interrupt received as a signal on one of the inputs 20 to 2x is latched in an interrupt store 2 and is passed to control logic 3 (which may be a microprocessor) by way of a data highway 4. The control logic 3 is arranged to be pre-programmed by the operating system of the multiple data processor arrangement (30 to 3N) with data defining which interrupts are enabled and which of the interrupts should give rise to an immediate interruption of the software running in one of the data processors. The aforementioned operating system also designates which of the *N* data processors will next handle interrupts.

Thus interrupts which are received by the interrupt logic 1 unit are latched into the interrupt store 2 and are compared by the control logic 3 with the above criteria. An interrupt which is not enabled as aforesaid is handled by the control logic 3 as a non-immediate interrupt. This facility permits unused ones of the inputs 20 to 2x to be left for future expansion, and unconnected, any such apparent interrupt signal being due possibly to "noise".

Some of the inputs 20 to 2x may also be programmed as not enabled when for example apparatus to which they are connected has been removed for servicing. However, if on comparison in the control logic 3 the particular interrupt is determined as enabled a further comparison is carried out to determine if the input is an immediate interrupt. If the interrupt is non-immediate no further action is taken by the control logic 3 for the time being.

If now a signal received on one of the inputs 20 to 2x is determined as being an immediate interrupt the control logic 3 forwards an immediate interrupt signal to the previously designated one of the data processors 30 to 3N on a respective one of the leads 60 to 6N.

On receipt of an interrupt signal the data processor selected (say) 30 stops running its present program and calls an interrupt handling program. The interrupt handling program initiates a read function which causes data to be transferred from the interrupt store 2 to the read register 5 and latches the data in the read register 5 to prevent alteration of the data while the data processor is performing the read which causes the contents of the register to be transferred over the data bus 9 which is an input/output bus of the data processor system. On completion of the read function the data set in the interrupt store 2 is cleared.

It is here noted that if the number of interrupt inputs 20 to 2x is greater than the number of highways in the data bus 9 a number of read registers 5 may be provided and each may be addressed in turn by the interrupt handling program of the data processor 30.

When the register 5 is read the signals therefrom pass by way of the AND gates 80 to 8x which are held enabled by the signal on the lead 7 from the control logic 3 and are fed back to the interrupt store 2 as latch resetting signals. Thus only those interrupt signals which have been successfully transferred are cancelled in the interrupt store 2, such signals arriving after latching of the read register 5 being retained for comparison in the control logic.

Once the interrupts have been transferred from the interrupt logic 1 the control logic disables the AND gates 80 to 8x and removes the latching signal from the read register 5. Further interrupt signals received at the inputs 20 to 2x are now similarly handled.

In normal operation, once one of the data processors 30 to 3N has been interrupted, the multiple data processor operating system will access the control logic 3 by way of the data bus 9 and change the data which designates the data processor to be interrupted.

As a further safeguard the control logic 3 may be arranged to commence a timeout once it has applied an interrupt signal on one of the leads 60 to 6N. If the read register 5 has not been addressed before expiry of the timeout then the control logic 3 is arranged to attempt to interrupt all of the data processors 30 to 3N in turn until a response is received. It is here noted that the timeout may be pre-set in the control logic 3 by the operating system by way of the data bus 9. It should also be noted that if the timeout above expires the control logic 3 will generate interrupt data of its own into the interrupt store which the data processor successfully interrupted will read as part of its read function and which will cause an indication of the failure if required.

Turning now to Figure 2 for security purposes the interrupt logic unit 1 of Figure 1 is duplicated, each of the logic units having the ability to interrupt any of the data processors 30 to 3N by way of respective interrupt leads 60 to 6N. For the purposes of description the interrupt logic unit on the left of Figure 2 and its associated interrupts are designated as for Figure 1 whilst their equivalents on the right of Figure 2 are similarly designated with the addition of a prime (').

Each of the interrupt logic units 1 operates in an identical manner as far as determining the validity and status of an input signal received on one of the inputs 20 to 2x is concerned. In the case of Figure 2 however, one of the logic units, say, 1 is designated by the multiple data processor operating system as the "working" unit whilst the other logic unit 1' is designated as the "stand-by" unit.

The two logic units 1 are interconnected with two respective additional leads 11, 12 which are used in the following manner; when the working logic unit 1 generates an interrupt on one of the leads 60 to 6N it will forward a signal on the lead 11 and when the logic unit 1 detects that the read register (5 of Figure 1) has been read it forwards a signal on the lead 12.

On receipt of an immediate interrupt the standby interrupt logic unit 1' commences a timeout and monitors the lead 11. This timeout may be preset by the operating system as previously described. The interrupt logic unit 1 having received the same immediate interrupt will proceed to pass a signal to one of the leads 60 to 6N and at the same time signals the lead 11.

The signal on the lead 11 is detected by the interrupt logic unit 1' which then cancels the timeout. The interrupt logic unit 1' now starts a further timeout and monitors the lead 12. When the interrupt logic unit 1 detects that the interrupted data processor say, 30 has read the interrupt data from the register 5 it forwards a signal on the lead 12 which is detected by the interrupt logic unit 1' which then cancels the second timeout thus completing the monitoring sequence.

If either of the timeouts expires without receipt of the respective signals on the leads 11 and 12, the interrupt logic unit 1' will generate an interrupt itself and will cause an additional interrupt flag indicating the failure of the "working" interrupt logic unit 1.

It is here noted that if whilst a first immediate interrupt and accumulated non-immediate interrupts are being transferred, a second immediate interrupt is received, the interrupt logic units 1, 1' will handle it on clearance of the read register. Thus if an immediate interrupt is received whilst the standby interrupt logic unit is monitoring the lead 12, the first monitoring timeout is also reset on detection of a signal on that lead.

The control logic 3 of the interrupt logic units 1 are arranged to receive a periodic 'refresh' signal by way of the data bus 9. This periodic refresh signal which should be provided by the multiple data processor operating system is used to reset a timeout in the control logic 3. If such a signal is not received prior to the expiry of the timeout the control logic generates an immediate interrupt. The interrupt logic unit 1 may also be arranged to cause a hardware alarm system (not shown) to operate.

The designation of the interrupt logic units 1, 1' as "working" and "standby" respectively is periodically reversed by the multiple data processor operating system to ensure that each is fully functional should one be required to act as the sole interrupt logic unit if the other is temporarily unavailable.

**Claims**

1. Interrupt signal handling apparatus for controlling the transfer of interrupt signals to a data processor (30—3N), said apparatus having two interrupt signal units (1, 1') each of which as a plurality of inputs (20—2x) arranged for connection to a respective source of interrupt signals, an output (60—6N, 60'—6N') for connection to a data processor, a data store (2) which stores each interrupt signal received on one of said inputs and control means (3) which compares each interrupt signal so received and stored with presettable criteria which determine whether the received signal is an immediate interrupt signal, characterised in that one of said units is selected as an active interrupt signal unit and the other of said units is selected as a monitoring interrupt signal unit, the active interrupt signal unit on determining that a received interrupt signal is an immediate interrupt signal causes all said interrupt signals currently stored to be passed to its respective output (60—6N) and the subsequent erasure of those interrupt signals whereby all interrupt signals received and stored as aforesaid are transferred to a data processor (30—3N) when connected to the apparatus, on occurrence of an immediate interrupt signal the monitoring interrupt signal unit (1, 1') monitors an output (11, 11') of the active interrupt signal unit (1, 1') to determine whether that unit (1, 1') has acted to transfer interrupt signals in the manner aforesaid and if so erases corresponding interrupt signals from its respective data store (2) and if not causes those corresponding interrupt signals to be transferred to its respective output (60'—6N') such that the interrupt signals for transfer to a data processor (30—3N) when connected to the apparatus are not lost if one of the interrupt signal units (1, 1') fails, and the selection of one of the units (1, 1') as active and the other as monitoring is effected by the control means (3) of the two interrupt signal units and is reversible from time-to-time responsive to action of a data processor (30—3N) when connected to the apparatus.

2. Interrupt signal handling apparatus as claimed in Claim 1 further characterised in that each of said interrupt signal units (1, 1') has a plurality of outputs (60—6N) each of which is arranged for connection to a respective one of a plurality of data processors (30—3N) and the control means (3) is presettable to select to which of the data processors (30—3N) the interrupt signals are transferred.

3. Interrupt signal handling apparatus as claimed in Claim 1 or Claim 2 further characterised in that the control means (3) of each of said interrupt signal units (1, 1') is responsive to signals from a data processor (30—3N) when connected thereto to cause data to be passed to the output (60—6N) without the occurrence of an immediate interrupt signal.

4. Interrupt signal handling apparatus as claimed in any preceding Claim further characterised in that the control means (3) of each of said interrupt signal units (1, 1') is arranged to monitor periodic timing signals from a data processor (30—3N) when connected thereto and is arranged to provide an alarm signal should any such timing signal be missed.

5. Interrupt signal handling apparatus as claimed in any preceding Claim further characterised in that each interrupt signal unit (1, 1') has a temporary data store (5) interposed between said data store (2) and said output (60, 6N) and the control means (3) is arranged on detection of an immediate interrupt signal to cause the interrupt signals to be transferred to said temporary data store (5) for presentation to the output.

6. Interrupt signal handling apparatus according to Claim 5 further characterised in that interrupt signals presented at the output (60—6N) by the temporary data store (5) are passed to the data store (2) and said data store (2) is arranged to erase only such interrupt signals as have been presented at the output (60—6N).

7. Interrupt signal handling apparatus as claimed in any preceding Claim further characterised in that the control means (3) is a microprocessor.

**Patentansprüche**

1. Verarbeitungsgerät für Interruptsignale zur Steuerung des Transfers von Interruptsignalen zu einem Datenprozessor (30—3N), welches Gerät zwei Interruptsignaleinheiten (1, 1') aufweist, von denen jede eine Vielzahl von Eingängen (20—2X) hat, die für den Anschluß an eine entsprechende Interruptsignalquelle eingerichtet sind, ferner einen Ausgang (60—6N, 60'—6N') für eine Verbindung zu einem Datenprozessor, einen Datenspeicher (2), der jedes auf einem dieser Eingänge empfangene Interruptsignal speichert, und eine Steuereinrichtung (3), die jedes derart empfangene und gespeicherte Interruptsignal mit vorgebbaren Kriterien vergleicht, die bestimmen, ob das empfangene Signal ein Sofort-Interruptsignal ist, dadurch gekennzeichnet, daß von diesen Einheiten eine Einheit als eine aktive Interruptsignaleinheit ausgewählt wird und die andere dieser Einheiten als eine überwachende Interruptsignaleinheit ausgewählt wird, daß die aktive Interruptsignaleinheit auf die Feststellung hin, daß ein empfangenes Interruptsignal ein Sofort-Interruptsignal ist, veranlaßt, daß sämtliche der augenblicklich gespeicherten Interruptsignale auf ihre jeweiligen Ausgänge (60—6N) übertragen werden, und die darauffolgende Löschung von solchen Interruptsignalen veranlaßt, wodurch sämtliche in vorgenannter Weise empfangenen und gespeicherten Interruptsignale zu einem Datenprozessor (30—3N) übertragen werden, wenn dieser zum Gerät verbunden ist, daß die überwachende Interruptsignaleinheit (1, 1') beim Auftreten eines Sofort-Interruptsignals einen Ausgang (11, 11') der aktiven Interruptsignaleinheit (1, 1') überwacht, um festzustellen, ob diese Einheit (1, 1') derart wirksam war, daß sie Interruptsignale in der vorgenannten Weise übertragen hat, und, wenn dies der Fall war, entsprechende Interruptsignale aus ihrem jeweiligen Datenspeicher (2) löscht, und wenn dies nicht der Fall war, veranlaßt, daß jene entsprechenden Interruptsignale zu ihrem jeweiligen Ausgang (60'—6N') so übertragen werden, daß die Interruptsignale für den Transfer zu einem Datenprozessor (30—3N), wenn dieser zum Gerät verbunden ist, nicht verlorengehen, falls eine der Interruptsignaleinheiten (1, 1') versagt oder ausfällt, und daß die Auswahl einer der Einheiten (1, 1') als aktive und der anderen als überwachende durch die Steuereinrichtung (3) der beiden Interruptsignaleinheiten bewirkt wird und von Zeit zu Zeit ansprechend auf die Aktionswirkung eines Datenprozessors (30—3N), wenn dieser zum Gerät verbunden ist, umkehrbar ist.

2. Verarbeitungsgerät für Interruptsignale nach Anspruch 1, ferner dadurch gekennzeichnet, daß jede der Interruptsignaleinheiten (1, 1') eine Vielzahl von Ausgängen (60—6N) aufweist, von denen jeder eine Verbindung zu einem entsprechenden einer Vielzahl von Datenprozessoren (30—3N) eingerichtet ist, und daß die Steuereinrichtung (3) hinsichtlich der Auswahl, zu welchem der Datenprozessoren (30—3N) die Interruptsignale übertragen werden, voreinstellbar ist.

3. Verarbeitungsgerät für Interruptsignale nach Anspruch 1 oder Anspruch 2, ferner dadurch gekennzeichnet, daß die Steuereinrichtung (3) von jeder der Interruptsignaleinheiten (1, 1') auf Signale von einem Datenprozessor (30—3N), wenn hiermit verbunden, derart anspricht, daß sie veranlaßt, daß Daten ohne das Auftreten eines Sofort-Interruptsignals an den Ausgang (60—6N) übertragen werden.

4. Verarbeitungsgerät für Interruptsignale nach jedem der vorhergehenden Ansprüche, ferner dadurch gekennzeichnet, daß die Steuereinrichtung (3) von jeder der Interruptsignaleinheiten (1, 1') so ausgelegt ist, daß sie periodische Zeitsteuersignale von einem Datenprozessor (30—3N), wenn hiermit verbunden, überwacht und so ausgelegt ist, daß sie, wenn das Fehlen irgendeines solchen Zeitsteuersignals festgestellt werden sollte, ein Alarmsignal liefert.

5. Verarbeitungsgerät für Interruptsignale nach jedem der vorhergehenden Ansprüche, ferner dadurch gekennzeichnet, daß jede Interruptsignaleinheit (1, 1') einen Datenzwischenspeicher (5) aufweist, der zwischen den Datenspeicher (2) und den Ausgang (60—6N) geschaltet ist, und daß die Steuereinrichtung (3) so ausgelegt ist, daß sie auf die Feststellung eines Sofort-Interruptsignales hin veranlaßt, daß die Interruptsignale zur Darstellung am Ausgang zum Zwischenspeicher (5) übertragen werden.

6. Verarbeitungsgerät für Interruptsignale nach Anspruch 5, ferner dadurch gekennzeichnet, daß die durch den Zwischenspeicher (5) am Ausgang (60—6N) dargestellten Signale zum Datenspeicher (2) übertragen werden und daß der Datenspeicher (2) so ausgelegt ist, daß er nur solche Interruptsignale, wie sie am Ausgang (60—6N) dargestellt worden sind, löscht.

7. Verarbeitungsgerät für Interruptsignale nach jedem der vorhergehenden Ansprüche, ferner dadurch gekennzeichnet, daß die Steuereinrichtung (3) ein Mikroprozessor ist.

**Revendications**

1. Appareil de gestion de signaux d'interruption destiné à commander le transfert de signaux d'interruption vers un processeur de données (30—3N), l'appareil ayant deux unités (1, 1') de signaux d'interruption, chacune ayant plusieurs entrées (20—2x) destinées à être connectées à une source respective de signaux d'interruption, une sortie (60—6N, 60'—6N') destinée à être connectée à un processeur de données, une mémoire de données (2) qui conserve chaque signal d'interruption reçu à l'une des entrées, et un dispositif de commande (3) qui compare chaque signal d'interruption ainsi reçu et mémorisé à des critères préréglables qui déterminent si le signal reçu est un signal d'interruption immédiate, caractérisé en ce que l'une des unités est sélectionnée comme unité active de signaux d'interruption et l'autre des unités est sélectionnée comme unité de contrôle de signaux d'interruption, l'unité active, après détermination qu'un signal d'interruption reçu est un signal d'interruption immédiate, provoquant la transmission de tous les signaux d'interruption conservés à ce moment vers sa sortie respective (60—6N) et l'effacement ultérieur de ces signaux d'interruption si bien que tous les signaux d'interruption reçus et conservés comme indiqué sont transférés à un processeur de données (30—3N) lorsqu'il est connecté à l'appareil, l'unité de contrôle (1, 1') de signaux d'interruption, après apparition d'un signal d'interruption immédiate, contrôlant une sortie (11, 11') de l'unité active (1, 1') de signaux d'interruption afin qu'elle détermine si cette unité (1, 1') a assuré le transfert des signaux d'interruption de la manière précitée et, en cas de réponse positive, efface les signaux correspondants d'interruption de sa mémoire respective de données (2) et, en cas de réponse négative, provoque le transfert des signaux correspondants d'interruption à sa sortie respective (60'—6N') si bien que les signaux d'interruption destinés à être transférés à un processeur de données (30—3N) lorsqu'il est connecté à l'appareil, ne sont pas perdus lorsque l'une des unités de signaux d'interruption (1, 1') est en panne, et la sélection de l'une des unités (1, 1') comme étant l'unité active et de l'autre comme étant l'unité de contrôle est réalisée par le dispositif de commande (3) des deux unités de signaux d'interruption et est réversible de temps en temps, à la suite de l'action d'un processeur de données (30—3N) lorsque celui-ci est connecté à l'appareil.

2. Appareil de gestion de signaux d'interruption selon la revendication 1, caractérisé en outre en ce que chacune des unités (1, 1') de signaux d'interruption a plusieurs sorties (60—6N) réalisées chacune afin qu'elles soient connectées à un processeur respectif parmi plusieurs processeur de données (30—3N), et le dispositif de commande (3) est préréglable afin qu'il sélectione le processeur de données (30—3N) auquel les signaux d'interruption sont transférés.

3. Appareil de gestion de signaux d'interruption selon l'une des revendications 1 et 2, caractérisé en outre en ce que le dispositif de commande (3) de chacune des unités (1, 1') de signaux d'interruption est commandé par des signaux provenant d'un processeur de données (30—3N) lorsqu'il est connecté à celui-ci de manière qu'il provoque la transmission de données à la sortie (60—6N) sans apparition d'un signal d'interruption immédiate.

4. Appareil de gestion de signaux d'interruption selon l'une quelconque des revendications précédentes, caractérisé en outre en ce que le dispositif de commande (3) de chacune des unités (1, 1') de signaux d'interruption est réalisé de manière qu'il contrôle des signaux périodiques de synchronisation provenant d'un processeur de données (30—3N) lorsqu'il est connecté à celuicu, et est réalisé de manière qu'il transmettre un signal d'alarme en cas de perte d'un quelconque des signaux de synchronisation.

5. Appareil de gestion de signaux d'interruption selon l'une quelconque des revendications précédentes, caractérisé en outre en ce que chaque unite' (1, 1') de signaux d'interruption a une mémoire temporaire (5) de données placée entre la mémoire de données (2) et la sortie (60—6N), et le dispositif de commande (3) est réalisé de manière que, après détection d'un signal d'interruption immédiate, il provoque le transfert des signaux d'interruption à la mémoire temporaire de données (5) afin qu'ils soient présentés à la sortie.

6. Appareil de gestion de signaux d'interruption selon la revendication 5, caractérisé en outre en ce que les signaux d'interruption présentés à la sortie (60—6N) par la mémoire temporaire (5) de données sont transmis à la mémoire de données (2) et la mémoire de données (2) est réalisée de manière qu'elle efface uniquement les signaux d'interruption qui ont été présentés à la sortie (60—6N).

7. Appareil de gestion de signaux d'interruption selon l'une quelconque des revendications précédentes, caractérisé en outre en ce que le dispositif de commande (3) est un microprocesseur.

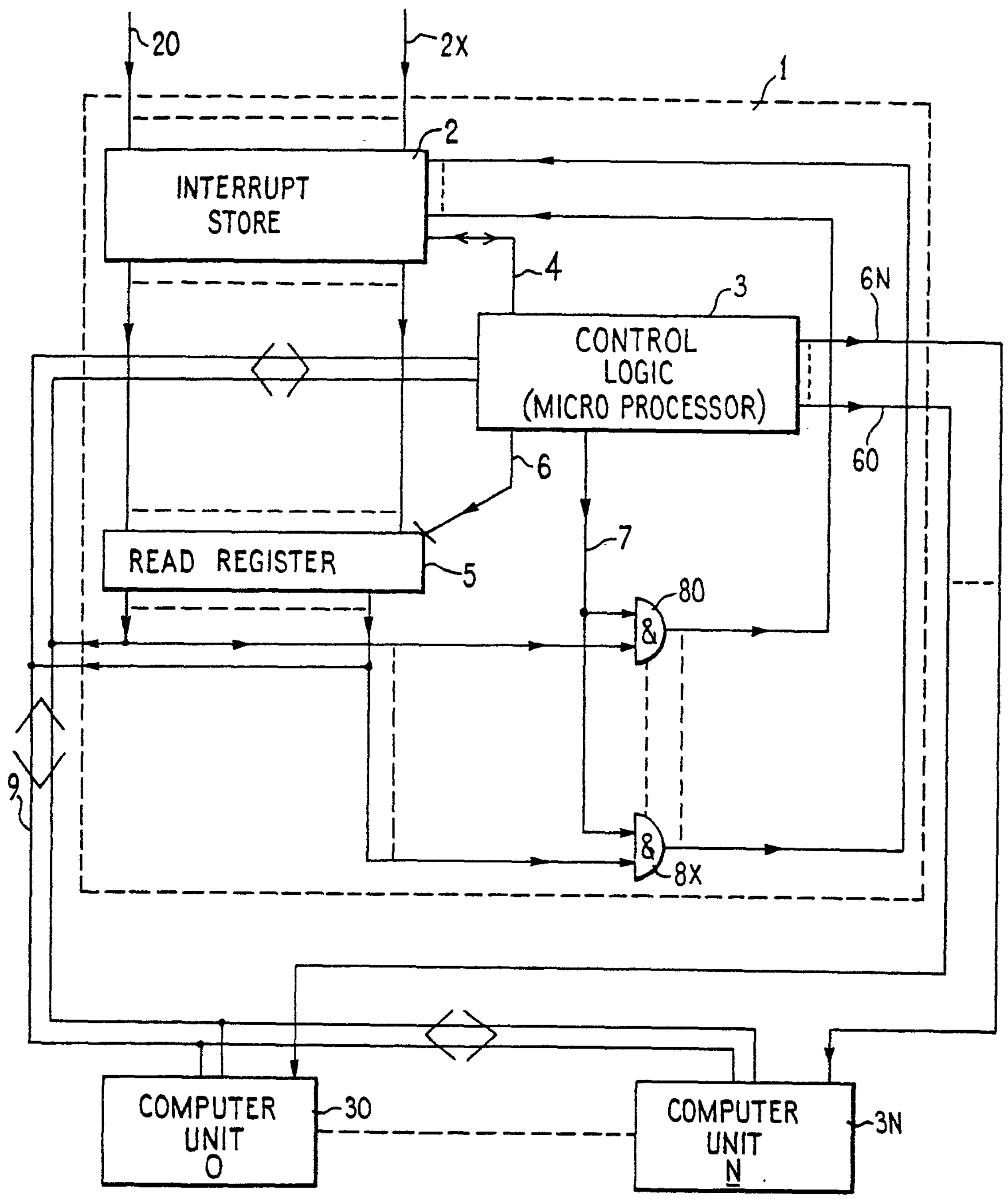
20
2X
1
2
INTERRUPT STORE
4
3
CONTROL LOGIC (MICRO PROCESSOR)
6N
60
6
7
READ REGISTER
5
80
&
&
8X
9
COMPUTER UNIT O
30
COMPUTER UNIT N
3N

FIG. 1

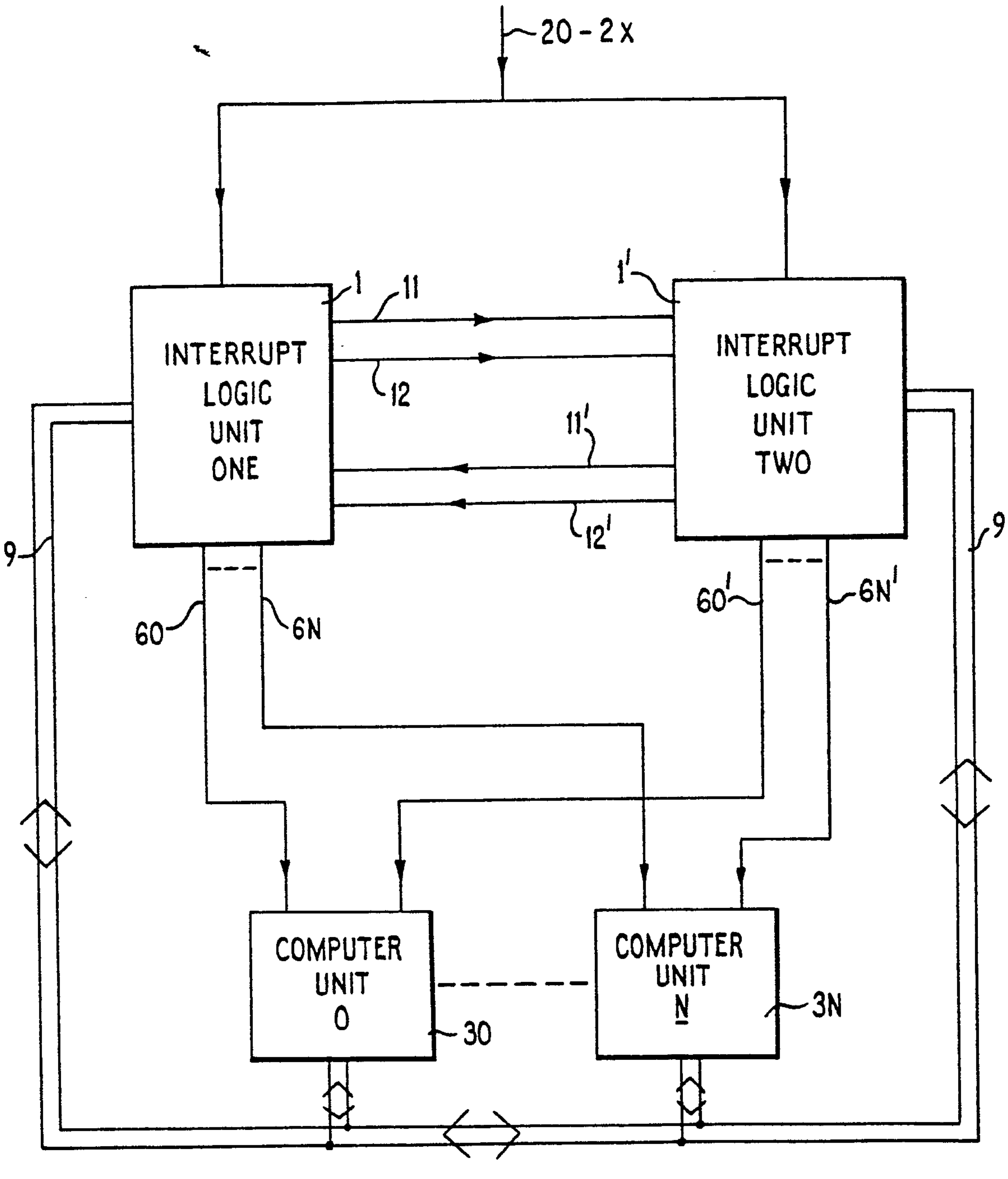
20-2X
1
11
1'
INTERRUPT
LOGIC
UNIT
ONE
INTERRUPT
LOGIC
UNIT
TWO
12
11'
12'
9
9
60
6N
60'
6N'
COMPUTER
UNIT
0
30
COMPUTER
UNIT
N
3N

FIG.2